**Europäisches Patentamt**

**European Patent Office**

**Office européen des brevets**

(19)

(11) Publication number: **0 125 021**
**B1**

(12) # EUROPEAN PATENT SPECIFICATION

(45) Date of publication of patent specification: **08.07.87**

(21) Application number: **84302341.7**

(22) Date of filing: **05.04.84**

(51) Int. Cl.⁴: **A 23 L 1/237,** A 23 L 1/22

(54) **Seasoning composition.**

(30) Priority: **08.04.83 JP 62831/83**

(43) Date of publication of application:
**14.11.84 Bulletin 84/46**

(45) Publication of the grant of the patent:
**08.07.87 Bulletin 87/28**

(84) Designated Contracting States:
**CH DE FR GB IT LI NL**

(56) References cited:
**US-A-2 471 144**
**US-A-4 340 614**

(73) Proprietor: **Takeda Chemical Industries, Ltd.**
**27, Doshomachi 2-chome Higashi-ku**
**Osaka-shi Osaka, 541 (JP)**

(72) Inventor: **Katagiri, Kiyoshi**
**27-8, Kamikatsuramaeda-cho**
**Nishikyo-ku Kyoto 615 (JP)**
Inventor: **Nakajima, Nobuo**
**18-101, 9 Okamoto 4-chome**
**Higashinada-ku Kobe Hyogo 658 (JP)**

(74) Representative: **Laredo, Jack Joseph et al**
**Elkington and Fife High Holborn House 52/54**
**High Holborn**
**London, WC1V 6SH (GB)**

Courier Press, Leamington Spa, England.

**0 125 021**

## Description

This invention relates to a seasoning composition containing potassium chloride, edible organic acid calcium salt other than calcium glutamate and a glutamic acid salt or/and nucleotide seasoning material in suitable proportions.

United States Patent 2,471,144 discloses a sodium free preparation as a substitute for common table salt containing chlorides of potassium and ammonium and in addition a small proportion of calcium and magnesium cations and citrate and formate anions. United States Patent 4,340,614 discloses a stringently sodium-restricted dietetic salt which comprises potassium as cation and adipate, tartrate, glutamate, inosinate and guanylate as anions.

It has recently become clear that an excessive intake of common salt tends to cause hypertension, heart disease and kidney disease and there has been a mounting awareness of the problem by the general consumers. Under the circumstances, potassium chloride came to be used as a substitute for common salt, i.e. sodium chloride, and has been used as an ingredient on table salt and many other processed foods. However, having a distinctly irritant, bitter and uncomfortable taste, potassium chloride is not a satisfactory substitute for common salt, and particularly in such applications as table salt where it is directly added to foods, the irritating and uncomfortable taste of potassium chloride inevitably becomes prominent.

For the purpose of overcoming these drawbacks, the present inventors investigated the means of removing the irritating and undesirable taste of potassium chloride and found that if an edible organic acid calcium salt is mixed with potassium chloride in suitable proportions, the irritating taste of potassium chloride is mitigated and that if a glutamic acid salt, which is a seasoning agent, or/and a nucleotide seasoning material are further admixed with the above mixture, the bitter and undesirable taste mentioned above is also remarkably improved, with the result that such a composition can be used as a satisfactory substitute for common salt or in combination with common salt. The above findings were followed by further studies, which have resulted in the completion of this invention.

This invention, therefore, relates to a seasoning composition comprising 100 weight parts of potassium chloride, 1.5 to 30 weight parts of edible organic acid calcium salt other than calcium glutamate and 1 to 30 weight parts of glutamic acid salt or/and 0.01 to 5 weight parts of nucleotide seasoning material.

The potassium chloride, edible organic acid calcium salt, glutamic acid salt and nucleotide seasoning material may all and respectively be those used commonly for food applications today. For example, such potassium chloride may be isolated and purified from any of naturally-occurring potassium chloride-containing rock salts (e.g. Syerinite, Carnallite, Kainite, etc.). The edible organic acid calcium salt mentioned above is preferably the calcium salt of a hydroxycarboxylic acid containing 3 to 9 carbon atoms, and this carboxylic acid preferably contains 1 to 3 carboxyl groups and 1 to 5 hydroxyl groups. Examples of such edible organic acid calcium salt include calcium citrate, calcium lactate, calcium pantothenate, calcium gluconate, calcium malate, etc., with calcium lactate being particularly desirable. The glutamic acid salt includes monosodium L-glutamate, monopotassium L-glutamate, calcium L-glutamate, etc. The nucleotide seasoning material includes sodium 5'-inosinate, sodium 5'-guanylate, etc. as well as a 1:1 (by weight) mixture of sodium 5'-inosinate and sodium 5'-guanylate, for instance. Further there may be mentioned calcium 5'-inosinate, calcium 5'-guanylate or their mixture, potassium 5'-inosinate, potassium 5'-guanylate or their mixture.

The proportions of potassium chloride, edible organic acid calcium salt and glutamic acid salt or/and nucleotide seasoning material in the seasoning composition of this invention have been mentioned hereinbefore. Preferably, however, the composition comprises 100 weight parts of potassium chloride, 2 to 15 weight parts of edible organic acid calcium salt and 3 to 20 weight parts of glutamic acid salt or/and 0.05 to 2 weight parts of nucleotide seasoning material.

If the proportion of edible organic acid calcium salt is less than the specified range, the desired effect of mitigating the irritating taste of potassium chloride will not be as great as desired, while an excess of the calcium salt over the specified range makes the irritating taste of the very organic acid calcium salt outstanding, thus failing to provide a satisfactory seasoning composition. If the proportions of glutamic acid salt or/and nucleotide seasoning agent are below the specified range, the bitter taste of potassium chloride will be felt, while an excess of either of them results in an excessively savory taste and does not provide a satisfactory salty taste. Thus, the composition of this invention is characterized in that by virtue of the inclusion of potassium chloride, edible organic acid calcium salt and glutamic acid salt or/and nucleotide seasoning agent in the specified proportions, the irritating, bitter and uncomfortable taste of potassium chloride is eliminated or mitigated to give a delicious salty taste. The process for production of the seasoning composition of this invention is not particularly limited but any production procedure may be employed provided potassium chloride, an edible organic calcium salt and glutamic acid salt or/and nucleotide seasoning material can thereby be admixed in the specified proportions. The composition may be provided in various forms such as powders, granules, grains, etc.

An especially desirable tasteful composition can be provided by coating crystals of potassium chloride with one or more members of said edible organic acid calcium salt, glutamic acid salt or/and nucleotide seasoning material. Regarding the coating method, the following processes may be mentioned as examples. Thus, fine crystals of potassium chloride are floated in a hot current of air and a solution or suspension of edible organic acid calcium salt, glutamic acid salt and nucleotide seasoning material is

2

sprayed onto the potassium chloride crystals. The conventional pan coating process may also be employed. The grain size of the seasoning composition of this invention may be selected by reference to the fluidity of the composition desired for actual use, for instance. For use as table salt, the seasoning composition desirably has a grain size of 48 to 32 meshes (Standard Sieve of Japanese Industrial Standards), corresponding approx. to 0.3—0.5 mm.

As long as the seasoning composition contains potassium chloride, edible organic acid calcium salt and glutamic acid salt or/and nucleotide seasoning material in the aforementioned proportions, various other edible additives may further be added for the purpose of improving its flavor, etc. For example, a still desirable flavor may be imparted by adding sodium chloride to the above composition. While the level of addition of sodium chloride is not particularly limited, the use of an excess would jeopardize the object of reducing the sodium chloride content. Usually, sodium chloride is used in a proportion of 1 to 50 weight parts to each 100 weight parts of potassium chloride. The flavor of the composition of this invention can be further improved by adding succinic acid or its salts such as mono- or disodium succinate, for instance. Its proportion is preferably 0.01 to 1 weight part relative to 100 weight parts of potassium chloride.

The seasoning composition of this invention is characterized in that the irritating and disagreeable taste of potassium chloride is muffled and in that it has a rounded, delicious taste, and can be used as a seasoning in applications similar to those of sodium chloride. A particularly suitable application is table salt, but the composition can also be used in cooked foods such as soups.

The following experimental and working examples are further illustrative of this invention.

Experimental Example 1

Potassium chloride and several kinds of calcium salts were blended in various proportions as indicated in Table 1 to give samples, and these samples were compared with a sample made 100% of potassium chloride by a panel of 20 tasters. The panellists were instructed to see if the irritating taste of potassium chloride had been mitigated. Thus, in this sensor evaluation, the panellists were specifically asked to compare Sample A (100% potassium chloride) with each of Sample B (mixtures of potassium chloride with various calcium salts), choose the less-irritating one and also comment on the flavor of each sample.

TABLE 1

| Sample A | Sample B | | | | Number of panellists who judged that Sample B is less-irritating | Panel's comment |
|---|---|---|---|---|---|---|
| Potassium chloride | Potassium chloride | 100 wt. parts | Calcium lactate | 1 wt. part | 12 | |
| | " | " | " | 2 | 15* | |
| | " | " | " | 5 | 16* | |
| | " | " | " | 10 | 17** | |
| | " | " | " | 20 | 17** | |
| | " | " | " | 30 | 17** | |
| | " | " | " | 40 | 18*** | Very bitter |
| Potassium chloride | Potassium chloride | 100 wt. parts | Calcium citrate | 1 wt. part | 9 | |
| | " | " | " | 2 | 16* | |
| | " | " | " | 5 | 15* | |
| | " | " | " | 10 | 17** | |
| | " | " | " | 20 | 17** | |
| | " | " | " | 30 | 16* | |
| | " | " | " | 40 | 16* | Very bitter |

0 125 021

TABLE 1 (contd.)

| Sample A | Sample B | | | | Number of panellists who judged that Sample B is less-irritating | Panel's comment |
|---|---|---|---|---|---|---|
| Potassium chloride | Potassium chloride | 100 wt. parts | Calcium carbonate | 1 wt. part | 11 | |
| | " | " | " | 2 | 8 | |
| | " | " | " | 5 | 13 | |
| | " | " | " | 10 | 12 | Powdery, unbalanced salty taste; not tasteful |
| | " | " | " | 20 | 15* | " |
| | " | " | " | 30 | 17** | " |
| | " | " | " | 40 | 16* | " |
| Potassium chloride | Potassium chloride | 100 wt. parts | Tricalcium phosphate | 1 wt. part | 10 | |
| | " | " | " | 2 | 10 | |
| | " | " | " | 5 | 12 | |
| | " | " | " | 10 | 14 | Powdery, unbalanced salty taste; not tasteful |
| | " | " | " | 20 | 15* | " |
| | " | " | " | 30 | 16* | " |
| | " | " | " | 40 | 16* | " |

Panel: 20 tasters, paired comparison test
* Significant difference at 5% level.
** Significant difference at 1% level.
*** Significant difference at 0.1% level.

As will be seen from Table 1, the addition of 2 weight parts or more of calcium lactate or calcium citrate to 100 weight parts of potassium chloride mitigates the irritating taste but the addition of more than 30 weight parts results in an intense bitter taste. As to calcium carbonate and tricalcium phosphate, the addition of 20 weight parts mitigates the irritating taste but causes the composition to become powdery, less salty and untasteful. It is thus clear that the addition of 1.5 to 30 weight parts of organic acid calcium salt is effective.

Experimental Example 2

To a control mixture of 100 weight parts of potassium chloride and 5 weight parts of calcium lactate was added monosodium L-glutamate or/and sodium 5'-ribonucleotide (a 50:50 mixture of sodium 5'-inosinate and sodium 5'-guanylate) in various proportions, and the samples so prepared were subjected to a sensory evaluation by a panel of 20 tasters to see whether the bitter taste was mitigated by the addition of the latter additive or/and additives. The results are shown in Table 2.

TABLE 2

| Sample A | Sample B | | | Number of panelists who judged that Sample B is less-irritating | Panel's comment |
|---|---|---|---|---|---|
| | Sample A (wt. parts) | Mono sodium L-glutamate (wt. parts) | Sodium 5'-ribo-nucleotide (wt. parts) | | |
| 100 wt. parts of potassium chloride & 5 wt. parts of calcium lactate | 105 | 0.5 | — | 12 | Bitter and untasteful |
| | " | 1 | — | 15* | Good salty taste |
| | " | 2 | — | 16* | " |
| | " | 5 | — | 16* | Excellent salty taste |
| | " | 10 | — | 17** | " |
| | " | 20 | — | 17** | " |
| | " | 30 | — | 17** | Slightly too savory but good salty taste |
| | " | 40 | — | 20*** | Too savory and unbalanced taste |
| | 105 | — | 0.005 | 9 | Bitter and untasteful |
| | " | — | 0.01 | 15* | Good salty taste |
| | " | — | 0.05 | 15* | Excellent salty taste |
| | " | — | 0.1 | 16* | " |
| | " | — | 1 | 15* | " |
| | " | — | 2 | 16 | " |
| | " | — | 5 | 17** | Slightly too savory but good salty taste |
| | " | — | 10 | 18*** | Too savory and unbalanced taste |

0 125 021

TABLE 2 (contd.)

| Sample A | Sample B | | | Number of panelists who judged that Sample B is less-irritating | Panel's comment |
|---|---|---|---|---|---|
| | Sample A (wt. parts) | Mono sodium L-glutamate (wt. parts) | Sodium 5'-ribo-nucleotide (wt. parts) | | |
| | 105 | 0.5 | 0.005 | 14 | Bitter and untasteful |
| | " | 1 | 0.01 | 17** | Good salty taste |
| | " | 5 | 0.05 | 17** | Excellent salty taste |
| | " | 5 | 0.5 | 19*** | " |
| | " | 10 | 0.1 | 18*** | " |
| | " | 20 | 0.2 | 19*** | " |
| | " | 30 | 0.3 | 19*** | Slightly too savory but good salty taste |
| | " | 30 | 3 | 20*** | " |
| | " | 40 | 10 | 20*** | Too savory and unbalanced taste |

Panel: 20 tasters, paired comparison test
\*    Significant difference at 5% level.
\*\*   Significant difference at 1% level.
\*\*\* Significant difference at 0.1% level.

# 0 125 021

As will be seen from Table 2, the addition of 1 to 30 weight parts of monosodium L-glutamate to a mixture of 100 weight parts of potassium chloride and 5 weight parts of calcium lactate gives a seasoning composition with the irritating and bitter tastes considerably mitigated.

A particularly satisfactory composition was obtained when 3 to 20 weight parts of monosodium L-glutamate was included.

As to sodium 5'-ribonucleotide, the addition of 0.01 to 5 weight parts, particularly 0.05 to 2 weight parts, to a mixture of 100 weight parts of potassium chloride and 5 weight parts of calcium lactate gives a good seasoning composition.

The combined use of sodium glutamate and sodium 5'-ribonucleotide also resulted in improved flavor and taste.

### Example 1

A fluidized bed granulating/coating equipment (Flow Coater Model FI-10, manufactured by Freund Ind. Co. Ltd., Japan) was charged with 1 kg of potassium chloride (297 µ to 500 µ) and 1 kg of a mixed aqueous solution of 3 weight % of calcium lactate, 8.5 weight % of monosodium L-glutamate and 0.5 weight % of sodium 5'-ribonucleotide was sprayed. The procedure gave a granular seasoning composition. This product can be used as table salt equivalent to common salt.

### Example 2

The same equipment as that used in Example 1 was charged with 1 kg of potassium chloride (297 µ to 500 µ), and 2 kg of a suspension of 5 wt.% of calcium lactate and 1.5 wt.% of sodium 5'-ribonucleotide was sprayed to give a granular seasoning composition.

This product can be used as table salt equivalent to common salt.

### Example 3

A small coating pan was charged with 3 kg of potassium chloride and while 150 g of fine powders of calcium citrate was dusted, water was sprayed over the contents to effect uniform coating. The coated mixture was dried with a hot draft of air.

Of this material, a 2.2 kg portion that passed a 32 mesh sieve but did not pass a 48 sieve was taken and uniformly admixed with 400 g of crystalline monosodium L-glutamate of the comparable grain size to give a seasoning composition. This product is suitable as a seasoning salt for use at the table.

### Example 4

A small coating pan was charged with 2 kg of potassium chloride and 0.9 kg of sodium chloride and while a suspension (500 g) of 8 wt.% of calcium lactate, 30 wt.% of monosodium L-glutamate and 4 wt.% of sodium 5'-inosinate was sprayed over the contents, and the whole contents were dried with a hot draft of air to give a granular seasoning composition.

This product can be used as table salt, and also for imparting a desirable taste to soups and other foods through addition during cooking in the same manner as common salt.

### Example 5

In a Nauta mixer (Vertical cone type mixer, Nauta Co., Holland), 88 kg of potassium chloride was stirred and a solution/suspension of 2 kg of calcium lactate, 7.5 kg of monosodium L-glutamate, 0.5 kg of sodium 5'-ribonucleotide, 1.2 kg of sodium chloride and 0.8 kg of succinic acid in 12 liters of water was sprayed over the potassium chloride to give a homogeneous mixture.

This mixture was taken out and dried in a hot-air dryer to give a granular seasoning composition. This product can be used as a flavorant table condiment.

### Example 6

In a Nauta mixer, 88 kg of potassium chloride was stirred and a solution/suspension of 2 kg of calcium lactate, 7.5 kg of monosodium L-glutamate, 0.5 kg of the mixture consisting of 50 weight parts of sodium 5'-inosinate and 50 weight parts of sodium 5'-guanylate, 1.2 kg of sodium chloride and 0.8 kg of disodium succinate (hexahydrate) in 12 liters of water was sprayed over the potassium chloride to give a homogeneous mixture. This mixture was taken out and dried in a hot-air dryer to give a granular seasoning composition.

### Example 7

The seasoning composition (8.5 kg) obtained by Example 6 was homogeneously mixed with 1.5 kg of sodium chloride to give a seasoning composition.

**Claims**

1. A seasoning composition, which comprises 100 weight parts of potassium chloride, 1.5 to 30 weight parts of edible organic acid calcium salt other than calcium glutamate and 1 to 30 weight parts of glutamic acid salt or/and 0.01 to 5 weight parts of nucleotide seasoning material.

9

2. The seasoning composition according to Claim 1, wherein the ratio of edible organic acid calcium salt other than calcium glutamate is 2 to 15 weight parts and the ratio of glutamic acid salt is 3 to 20 weight parts or/and the ratio of nucleotide seasoning material is 0.05 to 2 weight parts, relative to 100 weight parts of potassium chloride.

3. The seasoning composition according to Claim 1, wherein the edible organic acid calcium salt other than calcium glutamate is the calcium salt of a hydroxy-carboxylic acid having 3 to 9 carbon atoms.

4. The seasoning composition according to Claim 1, wherein the edible organic acid calcium salt other than calcium glutamate is calcium lactate.

5. The seasoning composition according to Claim 1, wherein the nucleotide seasoning material is an edible salt of 5'-inosinate and/or 5'-guanylate.

6. The seasoning composition according to Claim 5, wherein the edible salt is a mixture containing 50 weight parts of sodium 5'-inosinate and 50 weight parts of sodium 5'-guanylate.

7. The seasoning composition according to Claim 1, wherein the glutamic acid salt is monosodium L-glutamate.

8. The seasoning composition according to Claim 1, wherein sodium chloride is further contained.

9. A process for preparing a seasoning composition, which comprises admixing 100 weight parts of potassium chloride, 1.5 to 30 weight parts of edible organic acid calcium salt other than calcium glutamate and 1 to 30 weight parts of glutamic acid salt or/and 0.01 to 5 weight parts of nucleotide seasoning material.

**Patentansprüche**

1. Würzmischung, umfassend 100 Gew.-Teile Kaliumchlorid, 1,5 bis 30 Gew.-Teile eines von Calciumglutamat verschiedenen, genießbaren Calcium-Salzes einer organischen Säure und 1 bis 30 Gew.-Teile Glutaminsäure-Salz oder/und 0,01 bis 5 Gew.-Teile Nucleotid-Würzstoff.

2. Würzmischung nach Anspruch 1, dadurch gekennzeichnet, daß das Verhältnis des von Calciumglutamat verschiedenen, genießbaren Calcium-Salzes einer organischen Säure 2 bis 15 Gew.-Teile und das Verhältnis des Glutaminsäure-Salzes 3 bis 20 Gew.-Teile oder/und das Verhältnis des Nucleotid-Würzstoffs 0,05 bis 2 Gew.-Teile, jeweils bezogen auf 100 Gew.-Teile Kaliumchlorid, beträgt.

3. Würzmischung nach Anspruch 1, dadurch gekennzeichnet, daß das von Calciumglutamat verschiedene, genießbare Calcium-Salz einer organischen Säure das Calcium-Salz einer Hydroxycarbonsäure mit 3 bis 9 Kohlenstoff-Atomen ist.

4. Würzmischung nach Anspruch 1, dadurch gekennzeichnet, daß das von Calciumglutamat verschiedene, genießbare Calcium-Salz einer organischen Säure Calciumlactat ist.

5. Würzmischung nach Anspruch 1, dadurch gekennzeichnet, daß der Nucleotid-Würzstoff ein genießbares Salz von 5'-Inosinat und/oder 5'-Guanylat ist.

6. Würzmischung nach Anspruch 5, dadurch gekennzeichnet, daß das genießbare Salz eine 50 Gew.-Teile Natrium-5'-inosinat und 50 Gew.-Teile Natrium-5'-guanylat enthaltende Mischung ist.

7. Würzmischung nach Anspruch 1, dadurch gekennzeichnet, daß das Glutaminsäure-Salz Mononatrium-L-glutamat ist.

8. Würzmischung nach Anspruch 1, dadurch gekennzeichnet, daß weiterhin Natriumchlorid enthalten ist.

9. Verfahren zur Herstellung einer Würzmischung, dadurch gekennzeichnet, daß 100 Gew.-Teile Kaliumchlorid, 1,5 bis 30 Gew.-Teile eines von Calciumglutamat verschiedenen, genießbaren Calcium-Salzes einer organischen Säure und 1 bis 30 Gew.-Teile Glutaminsäure-Salz oder/und 0,01 bis 5 Gew.-Teile Nucleotid-Würzstoff miteinander vermischt werden.

**Revendications**

1. Composition d'assaisonnement qui comprend 100 parties en poids de chlorure de potassium, de 1,5 à 30 parties en poids d'un sel de calcium d'un acide organique, comestible, autre que le glutamate de calcium et de 1 à 30 parties en poids d'un sel de l'acide glutamique ou/et de 0,01 à 5 parties en poids d'un produit nucléotide d'assaisonnement.

2. Composition d'assaisonnement selon la revendication 1, dans laquelle la proportion du sel de calcium d'un acide organique, comestible, autre que le glutamate de calcium, est de 2 à 5 parties en poids et la proportion du sel de l'acide glutamique est de 3 à 20 parties en poids ou/et la proportion de produit nucléotide d'assaisonnement est de 0,05 à 2 parties en poids, par rapport à 100 parties en poids de chlorure de potassium.

3. Composition d'assaisonnement selon la revendication 1, dans laquelle le sel de calcium d'un acide organique, comestible, ature que le glutamate de calcium, est le sel de calcium d'un acide hydroxycarboxylique comportant de 3 à 9 atomes de carbone.

4. Composition d'assaisonnement selon la revendication 1, dans laquelle le sel de calcium d'un acide organique, comestible, autre que le glutamate de calcium, est le lactate de calcium.

5. Composition d'assaisonnement selon la revendication 1, dans laquelle le produit nucléotide d'assaisonnement est un sel comestible de 5'-inosinate et/ou de 5'-guanylate.

6. Composition d'assaisonnement selon la revendication 5, dans laquelle le sel comestible est un mélange contenant 50 parties en poids de 5'-inosinate de sodium et 50 parties en poids de 5'-guanylate de sodium.

7. Composition d'assaisonnement selon la revendication 1, dans laquelle le sel de l'acide glutamique est le L-glutamate monosodique.

8. Composition d'assaisonnement selon la revendication 1, qui contient en outre du chlorure de sodium.

9. Procédé de préparation d'une composition d'assaisonnement, selon lequel on mélange 100 parties en poids de chlorure de potassium, de 1,5 à 30 parties en poids d'un sel de calcium d'un acide organique, comestible, autre que le glutamate de calcium, et de 1 à 30 parties en poids d'un sel de l'acide glutamique ou/et de 0,01 à 5 parties en poids d'un produit nucléotide d'assaisonnement.